# EUROPEAN PATENT APPLICATION

(11) **EP 4 432 691 A1**
(43) Date of publication of application: **18.09.2024**
(21) Application number: 23162353.9
(22) Date of filing: 16.03.2023
(51) Int. Cl.: H04Q 9/00, G06F 1/3206, H04W 52/02

(54) **DEVICE AND SYSTEM FOR MONITORING ELECTRIC SENSOR SIGNALS**

(71) Applicant: Worthington Cylinders GmbH, 3291 Kienberg b. Gaming (AT)
(72) Inventor: Blondeau, Jean, 12555 Berlin (DE)
(74) Representative: Schwarz & Partner Patentanwälte GmbH

(57) **Abstract**

1. A device (10) for monitoring electric signals from external sensors (21, 22, 23) comprises an input (13) for slowly changing signals from an external sensor (23), an electronic processor (15) periodically switchable into a working mode, a wireless data transmission module (17), and a battery (14). In the working mode the processor (15) reads the signal at the input (13) for slowly changing signals and transmits it to a remote server (24). The device (10) further comprises inputs (11, 12) for receiving dynamically changing signals from an external sensor (21, 22), signal input electronics (18) watching if the signal at the input (11, 12) for dynamically changing signals meets an event condition and in case the event condition is met generating a wake-up signal (18a) causing the processor (15) to be switched into the working mode for transmitting the dynamically changing signal to the remote server (24).

## Description

The invention relates to a device and a system for monitoring electric signals from external sensors. The invention further relates to a pressure vessel equipped with a device for monitoring electric signals from external sensors.

Known autonomous remote monitoring sensors on mobile apparatuses are consuming electric power from their battery even when no noteworthy changes of the signals of their physical sensors occur. This results in a short battery lifetime.

Systems with periodical data capture and data transmission can feature an extended battery lifetime when the system is switched into a sleep mode between the periodical data capture. However, the drawback of such a system is that short relevant signal changes of the sensors occurring between the periodical data captures may be missed. When the sensor watches system critical parameters missing of relevant sensor signal changes can result in system damages or cause dangerous situations.

It is therefore an object of the present invention to provide a device and a system for monitoring electric signals from external sensors that consume extremely low electric power and provide for reliably reading of dynamically changing sensor signals.

This object is achieved by means of a device for monitoring electric signals from external sensors, the device comprising at least one input configured to receive slowly changing signals from an external sensor, an electronic processor that is switchable between a sleep mode and a working mode, a wake-up timer configured to periodically switch the processor from the sleep mode into the working mode, a wireless data transmission module, and a battery for supplying electric power to all electric power-consuming components of the device, wherein in the sleep mode the processor is in a power-saving state and in the working mode the processor is configured to read the signal at the input for slowly changing signals, to process it and to transmit the processed signal via the data transmission module to a remote server. The device further comprises at least one input configured to receive dynamically changing signals from an external sensor, signal input electronics connected to the input for dynamically changing signals and configured to watch if the signal at the input for dynamically changing signals meets an event condition and in case the event condition is met to generate a wake-up signal and transmit the wake-up signal to the processor causing the processor to be switched into the working mode, wherein in the working mode the processor is configured to read and process the dynamically changing signal and to transmit it via the data transmission module to the remote server.

This invention combines the low power consumption advantages of periodically reading and transmitting signals from sensors and the continuous watching of system-relevant parameters for the generation of alarms or for triggering case specific data processing without consuming power at the processing level during the eventless time.

The term "dynamically changing signals" means that the signal may change so rapidly that the changes are shorter than the periodical switching of the processor into the working mode. Relevant changes of dynamically changing signals may occur in less than one second or even within less than 100 milliseconds. In contrast thereto the term "slowly changing signals" means that the signal changes so slowly that any noticeable change will reliably be read by the processor during its periodic working mode.

The "sleep mode" of the processor is a power-saving state that a microprocessor can enter when it is not actively performing any tasks. In this state, the processor consumes very little power, which helps to extend the battery life of the device. According to the invention, the processor can even be switched into a deep sleep mode causing the processor to consume almost no power, with the trade-off that the processor needs a longer time to wake up from deep sleep than from moderate sleep mode.

The wake-up timer can be implemented as a software-based wake-up timer using the system's clock or timer to trigger the wake-up event, wherein the system clock can be integrated into the processor. Alternatively, the wake-up timer comprises a real-time clock for calculating the switching periods. The wake-up timer is configured as a periodic wake-up timer waking up the processor at regular intervals, such as every few minutes or every hour. Using the periodic wake-up timer for the processor conserves power while the processor is still able to perform certain tasks at specific times.

In a preferred embodiment of the invention the wireless data transmission module is configured as a high-speed wireless communication module, preferably an LTE module. LTE is a mobile network standard that provides faster data transfer speeds and lower latency than previous generations of mobile networks. Alternatively, the data transmission module is configured as Wi-Fi, or Bluetooth module.

In another preferred embodiment of the invention, which is well suited for external sensors delivering analogue output signals the signal input electronics comprises an ultra-low power analogue-to-digital converter (ADC) configured to convert analogue sensor signals at the input for dynamically changing signals into digital sensor signals and to transmit the digital sensor signals to the processor. The term "ultra-low power" as used herein means that the ADC consumes a current of less than 10 micro-Amperes, preferably less than 5 micro-Amperes.

In order to reliably sense unscheduled dynamic events that result in dynamic changes of the signals from the sensors the event condition can be defined as met when the signal at the input for dynamically changing signals exceeds or falls below a threshold value, or when the rate of change of the signal at the input for dynamically changing signals exceeds a threshold value. The processor can be configured to dynamically change the threshold value based on the last read value of the signal at the input for dynamically changing signals.

The object of the present invention is also achieved by means of a system for monitoring electric signals from sensors, comprising a device for monitoring electric signals from external sensors as defined above, at least one sensor connected to an input for receiving slowly changing signals, at least one sensor connected to an input for receiving dynamically changing signals, and a remote server. The sensor connected to an input for receiving slowly changing signals can for instance be a pressure sensor. The sensor connected to an input for receiving dynamically changing signals can be a temperature sensor or an acceleration sensor.

In a preferred embodiment of the system according to the invention the remote server is a cloud computing server. Such an embodiment realizes an "edge computing" solution, which is a distributed computing solution bringing computation and data storage closer to the source of the data. It involves placing small, low-power computing devices, in this case the device for monitoring electric signals from external sensors at the "edge" of a network, where the data are generated. These edge devices perform the tasks of data collection, preprocessing, and pre-analyzing, thereby reducing the amount of data that needs to be sent to the remote server. By processing data closer to the source, edge computing can reduce the time it takes for data to be analyzed and acted upon, making it well suited for real-time applications. By distributing computation and storage across multiple edge devices, the system can continue to function even if some devices fail or lose connectivity. By reducing the amount of data that needs to be sent to a central location, edge computing can reduce the costs associated with network bandwidth and cloud storage. The present system can be implemented as an industrial Internet-of Things (IoT) solution, with the edge devices used to monitor and control industrial equipment in real-time, enabling predictive maintenance and other efficiency improvements. The remote server can be configured to carry out diagnostics and to generate alarms or reports based on the data received from the edge device, i.e., data received from the device for monitoring electric signals from external sensors.

A preferred industrial implementation of the present invention relates to a pressure vessel provided with a device for monitoring electric signals from external sensors according to the invention, at least one sensor connected to an input for receiving slowly changing signals, and at least one sensor connected to an input for receiving dynamically changing signals. When the sensor connected to an input for receiving slowly changing signals is a pressure sensor the filling state of the pressure vessel with compressed gas can periodically be transmitted to the remote server, allowing the remote server to detect if the pressure vessel needs to be re-filled or replaced and to calculate statistics such as the gas consumption per time period. When the sensor connected to an input for receiving dynamically changing signals is a temperature sensor or an acceleration sensor, potentially harmful events occurring to the pressure vessel, such as an inacceptable high ambient temperature or mechanical shocks acting on the pressure vessel, can be detected and necessary actions can be taken in time.

Further details and advantages of the invention will become more apparent in the following description and the accompanying drawings.
Figure 1 shows a schematic structure of the device and the system for monitoring electric signals from external sensors according to the invention; and
Figure 2 schematically shows a pressure vessel equipped with a device for monitoring electric signals from external sensors according to the invention.

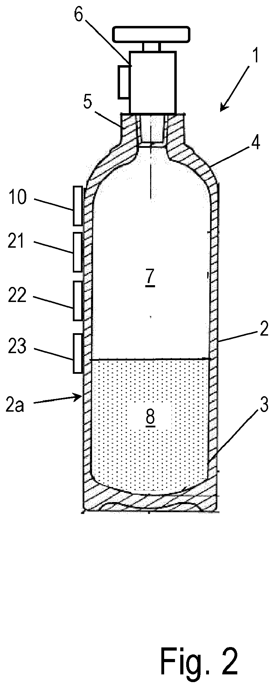

Fig. 2 shows a schematical longitudinal section of a pressure vessel 1 configured as a pressure gas cylinder. A gas cylinder is a pressure vessel 1 that is used to store and transport gases at high pressure. It is universally applicable, for example, in industry, welding, medicine, laboratories, the food and beverage industry, as fire-fighting equipment and for water treatment. The main parts of the gas cylinder include the cylinder wall 2 which is the main component of the gas cylinder, which is made from a strong and durable material, such as steel or aluminum, to withstand the high pressures of the gas inside. The cylinder wall 2 has a bottom 3 for placing the vessel 1 safely in an upright position. The cylinder wall 2 has a neck 5 extending from an end section of the cylinder wall 2 which is remote from the bottom 3 and formed as a shoulder 4. A valve 6 is attached to the neck 5 through a threaded connection. The valve 6 controls the flow of gas in and out of the cylinder. The cylinder wall 2 defines an interior chamber 7 of the pressure vessel 1, where the compressed gas 8 is stored.

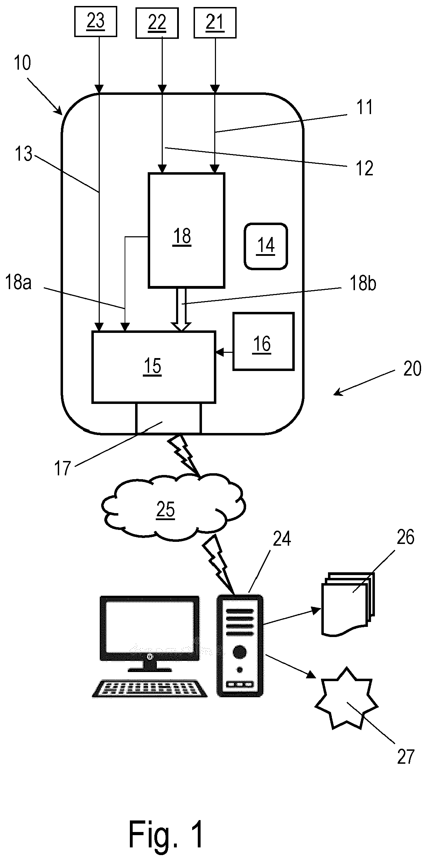

A device 10 for monitoring electric signals from external sensors is mounted onto the outer surface 2a of the cylinder wall 2 and connected to sensors 21, 22, 23. For further explanation of the device 10 for monitoring electric signals from external sensors reference is also made to Fig. 1.

In the depicted embodiment of the invention, the device 10 for monitoring electric signals from external sensors comprises one input 13 configured to receive slowly changing signals from an external sensor 23, which is a pressure sensor for measuring the pressure of the gas 8 in the interior chamber 7 of the pressure vessel 1, an electronic processor 15 that is switchable between a sleep mode and a working mode, a wake-up timer 16 configured to periodically switch the processor 15 from the sleep mode intoto the working mode, a wireless data transmission module 17, and a battery 14 for supplying electric power to all electric power-consuming components of the device 10 and if necessary, also to the sensors connected to the device 10.

The electronic processor 15 is an integrated microcontroller device comprising - in a single housing - a computational unit, a random-access memory, a read-only memory for storing program instructions, input and output connections as required and other components conventional computational units are usually equipped with.

The wake-up timer 16 is either implemented as a software-based wake-up timer using a system clock or timer to trigger the wake-up event. Alternatively, the wake-up timer 16 is hardware-implemented using its own real-time clock for calculating the switching periods. The wake-up timer 16 wakes up the processor at periodical intervals, such as every few minutes or every hour.

When the processor 15 is in the working mode it reads the slowly changing signal generated by the pressure sensor 23 at the input 13, processes it and transmits the processed signal via the data transmission module 17 to a remote server 24. Thereafter, the processor 15 switches itself into the sleep mode.

The device 10 further comprises two inputs 11, 12 configured to receive dynamically changing signals from external sensors 21, 22, which sensors 21, 22 are e.g., a temperature sensor and an accelerometer. The two inputs 11, 12 for dynamically changing signals are connected to a signal input electronics 18 that is configured to watch if the signals at the inputs 21, 22 for dynamically changing signals meet an event condition. In case the event condition is met the signal input electronics 18 generates a wake-up signal 18a and transmits the wake-up signal 18a to the processor 15 causing the processor 15 to be switched into the working mode. In the working mode the processor 15 reads and processes the dynamically changing signals generated by the sensors 21, 22, i.e., the temperature sensor and/or the accelerometer and transmits them via the data transmission module 17 to the remote server 24.

Event conditions that may be applied are watching whether the signals at the inputs 11, 12 for dynamically changing signals exceed or fall below a threshold value, or whether the rate of change of the signals at the inputs 11, 12 for dynamically changing signals exceed a threshold value.

In the depicted embodiment of the invention the signal input electronics 18 comprises an ultra-low power analogue-to-digital converter configured to convert analogue sensor signals at the inputs 11, 12 for dynamically changing signals into digital sensor signals 18b and to transmit the digital sensor signals 18b to the processor 15.

The system 20 for monitoring electric signals from the sensors 21, 22, 23 comprises the device 10 for monitoring electric signals from external sensors. It further comprises at least one sensor 23 connected to the input 13 for receiving slowly changing signals of the device 10, at least one sensor 21, 22 connected to the input 11, 12 for receiving dynamically changing signals of the device 10, and a remote server 24. In this example the remote server 24 is an internet cloud 25 computing server. The remote server 24 is configured to carry out diagnostics and to generate alarms 26 or reports 27 based on the data received from the device 10 for monitoring signals from the sensors 21, 22, 23. The system 20 may further comprise a global positioning module (not shown) and other sensors. The system 20 can be realized as a monitoring system to monitor and survey mobile apparatuses having slowly changing main measured parameters (such as the pressure of gas 8 in the interior chamber 7 of a pressure vessel 1) and having dynamically changing measured parameters, such as safety-related parameters like ambient temperature and mechanical shocks exerted on the mobile apparatus. The data derived from the sensor signals can for instance be used in predictive maintenance or warranty denial issues.

## Claims

1. A device (10) for monitoring electric signals from external sensors (21, 22, 23), comprising at least one input (13) configured to receive slowly changing signals from an external sensor (23), an electronic processor (15) that is switchable between a sleep mode and a working mode, a wake-up timer (16) configured to periodically switch the processor (15) into the working mode, a wireless data transmission module (17), and a battery (14) for supplying electric power to all electric power-consuming components of the device (10), wherein in the sleep mode the processor (15) is in a power-saving state, wherein in the working mode the processor (15) is configured to read the signal at the input (13) for slowly changing signals, to process it and to transmit the processed signal via the data transmission module (17) to a remote server (24),
**characterized in that**
the device (10) further comprises at least one input (11, 12) configured to receive dynamically changing signals from an external sensor (21, 22), signal input electronics (18) connected to the input (11, 12) for dynamically changing signals and configured to watch if the signal at the input (11, 12) for dynamically changing signals meets an event condition and in case the event condition is met to generate a wake-up signal (18a) and to transmit the wake-up signal (18a) to the processor (15) causing the processor (15) to be switched into the working mode, wherein in the working mode the processor (15) is configured to read and process the dynamically changing signal at the input (11, 12) for dynamically changing signals and to transmit it via the data transmission module (17) to the remote server (24).

2. The device according to claim 1, wherein the wake-up timer (16) is configured to use a system clock of the processor (15) for calculating the switching periods.

3. The device according to claim 1, wherein the wake-up timer (16) comprises a real-time clock for calculating the switching periods.

4. The device according to any one of claims 1 to 3, wherein the wireless data transmission module (17) is configured as a high-speed wireless communication module, preferably an LTE module.

5. The device according to any one of claims 1 to 4, wherein the signal input electronics (18) comprises an ultra-low power analogue-to-digital converter configured to convert analogue sensor signals at the input (11, 12) for dynamically changing signals into digital sensor signals (18b) and to transmit the digital sensor signals (18b) to the processor (15).

6. The device according to any one of claims 1 to 5, wherein the event condition is defined as met when the signal at the input (11, 12) for dynamically changing signals exceeds or falls below a threshold value, or when the rate of change of the signal at the input (11, 12) for dynamically changing signals exceeds a threshold value.

7. The device according to claim 6, wherein the processor (15) is configured to dynamically change the threshold value based on the last read value of the signal at the input (11, 12) for dynamically changing signals.

8. A system (20) for monitoring electric signals from sensors (21, 22, 23), comprising a device (10) for monitoring electric signals from external sensors according to any one of the preceding claims, at least one sensor (23) connected to an input (13) for receiving slowly changing signals of the device (10), at least one sensor (21, 22) connected to an input (11, 12) for receiving dynamically changing signals of the device (10), and a remote server (24).

9. The system according to claim 8, wherein the sensor (23) connected to the input (13) for receiving slowly changing signals is a pressure sensor.

10. The system according to claim 8 or 9, wherein the sensor (21, 22) connected to the input (11, 12) for receiving dynamically changing signals is a temperature sensor or an acceleration sensor.

11. The system according to any one of claims 8 to 10, wherein the remote server (24) is an internet cloud (25) computing server.

12. The system according to any one of claims 8 to 11, wherein the remote server (24) is configured to carry out diagnostics and to generate alarms (26) or reports (27) based on the data received from the device (10) for monitoring electric signals from external sensors.

13. A pressure vessel (1), **characterized in that** the pressure vessel (1) comprises a device (10) for monitoring electric signals from external sensors according to any one of claims 1 to 7, at least one sensor (23) connected to an input (13) for receiving slowly changing signals of the device (10), and at least one sensor (21, 22) connected to an input (11, 12) for receiving dynamically changing signals of the device (10).

14. The pressure vessel according to claim 13, wherein the sensor (23) connected to the input (13) for receiving slowly changing signals is a pressure sensor.

15. The pressure vessel according to claim 13 or 14, wherein the sensor (21, 22) connected to the input (11, 12) for receiving dynamically changing signals is a temperature sensor or an acceleration sensor.
